# EUROPEAN PATENT APPLICATION

(11) **EP 2 949 373 A1**
(43) Date of publication of application: **02.12.2015**
(21) Application number: 14425068.5
(22) Date of filing: 30.05.2014
(51) Int. Cl.: B01D 17/04, B01D 41/02, B01D 24/16, B01D 29/00

(54) **Coalescence filtering apparatus for separating oil from an oil-in-water dispersion and coalescence filtration method for separating oil from an oil-in-water dispersion**

(71) Applicant: Unidro S.p.A., 20128 Milano (IT)
(72) Inventor: Ungari, Gianpiero, 20128 Milano (IT); Abbona, Lorenzo, 20128 Milano (IT)
(74) Representative: Sgobba, Marco

(57) **Abstract**

A coalescence filtering apparatus comprises a container (2), a first coalescence zone (4) comprising an inlet partition (5) and an outlet partition (6) delimiting a bed of granules (7) of oleophilic material, and designed to inhibit expansion of the bed of granules (7), a second coalescence zone (8), located structurally above said first coalescence zone (4) and functionally upstream therefrom, comprising an inlet partition (9) and an outlet partition (10) delimiting a bed of granules (11) of oleophilic material and designed to inhibit expansion of the bed of granules (11). The apparatus further comprises a filtering bed (16) comprising material in the form of granules (17) having an average density of less than 1000 kg/m³, which is located below the first coalescence zone (4), the filtering bed (16) being able to expand within the container (2) below the first coalescence zone (4).

## Description

### Field of the Invention

The present invention relates to a coalescence filtering apparatus for separating oil from an oil-in-water dispersion and a coalescence filtration method for separating oil from an oil-in-water dispersion.

As used herein and in the accompanying claims, the term "dispersion" is intended to designate a nonhomogeneous mixture of two (not necessarily different) phases having no chemical affinity for each other. In the particular case of this invention, i.e. an oil-in-water dispersion, the two phases are identical (liquid phases) and the lack of chemical affinity is given by the polarity of water molecules and the non-polar nature of the organic compounds that typically form an oil.

Oil-in-water dispersions are a typical by-product or waste product in a variety of industrial processes, such as refining processes. The present invention is mainly directed to oil-in-water dispersions in which the oil fraction ranges from 10 ppm to 1000 ppm.

### Description of the related art

In industrial processes having oil-in-water dispersions as a byproduct or waste product, the oil fraction must be very often separated from water. This requirement may be dictated either by production needs or by environmental considerations, especially when the oil-in-water dispersion is a waste product to be disposed of or returned to the environment.

Dispersed oil droplets may be separated from the continuous phase, i.e. water, first by coalescence of droplets into larger drops and then by gravimetric separation so formed from water. For this purpose coalescence filtration devices are known which separate oil from the oil-in-water dispersion.

These known devices consist of a vertically extending container having therein a primary coalescence zone and a secondary coalescence zone. In the primary coalescence zone, a first coalescence bed is provided between two retention plates, that are designed to prevent expansion of the bed during use. The coalescence bed is composed of oleophilic resin granules. A further coalescence bed is provided in the secondary zone, in which the grain size of the oleophilic resins is greater than that of the first coalescence bed. The secondary zone is located functionally downstream from the first zone and structurally above it.

The dispersion to be filtered is introduced into a zone located at the base of the container, such that an ascending flow is established through the primary coalescence zone and later the secondary coalescence zone. In the primary coalescence zone the dispersed oil droplets adhere to the granules of the coalescence bed thereby forming an oily film whose thickness increases as the dispersion flows through the bed. At a given time, the oily film is removed from the granules by the flow of the dispersion through the bed thereby which forms larger drops as compared with the droplets dispersed in the dispersion. These drops migrate toward the upper part of the bed where the drops coalesce to form larger oil aggregates that migrate toward the secondary zone. In the secondary zone, the second coalescence bed aggregates oil in even larger drops. Under the hydrostatic force these drops reach the upper part of the container and form an oil layer that is well separated from water, and is removed by water-oil separation.

As mentioned above, the flow of the dispersion to be separated is directed from bottom to top (Up-Flow) for maximized separation efficiency. This is because in an oil-in-water dispersion hydrostatic forces are predominant over viscous forces, and hence separation is more efficient in case of Up-Flows. Since efficient coalescence may be only obtained if the bed of coalescent resins is compact, the bed must be retained between the two above-mentioned plates which have holes allowing the dispersion to flow therethrough and blocking the passage of the bed granules. Particularly, the bottom plate supports the bed against the force of gravity and the top plate maintains compaction of the bed during use against expansion thereof under the action of the liquid that flows therethrough.

Nevertheless, this structural constraint has certain drawbacks.

The purpose of the coalescence bed is to promote coalescence of oil drops dispersed in the continuous phase (water), but the coalescence bed also acts by itself as a physical filter. Therefore, any suspended solids in the dispersion might be intercepted by the coalescence bed and clog it. Particularly, the smaller the grain size of bed granules, the more the bed retains small suspended solids (which are not easily removed from the dispersion beforehand).

As the amount of solids retained in the coalescence bed increases, pressure losses through the bed also increase, and cause risks for the structural integrity of the bed and/or involve the need for extraordinary maintenance, requiring shutdown of the unit.

In view of obviating this serious drawback, requiring shutdown of the machine for removal and regeneration of the coalescence bed, the above described coalescence filters are usually employed in separating dispersions that do not contain suspended solids. Nevertheless, this condition cannot be always ensured, as it is not always possible to accurately monitor what occurs upstream from the separating unit.

It should be noted that even dispersions containing as little as a few ppm (3-5 ppm) of solid suspensions may cause clogging of the coalescence bed (after extended use).

Therefore, in applications that do not allow periodic shutdown of the plant, solid particle filters are usually placed upstream from the separation apparatus, which increases dimensions and design, production and installation costs for the plant.

### SUMMARY OF THE INVENTION

In this context, the technical purpose of the present invention is to provide a coalescence filtering apparatus for separating oil from an oil-in-water dispersion and a coalescence filtration method for separating oil from an oil-in-water dispersion that can obviate the above mentioned prior art drawbacks.

Particularly, the object of the present invention is to provide a coalescence filtering apparatus for separating oil from an oil-in-water dispersion and a coalescence filtration method for separating oil from an oil-in-water dispersion that can prevent contamination of the coalescence bed by solid particles contained in the dispersion to be separated.

The technical purpose and the object as set forth above are substantially fulfilled by a coalescence filtering apparatus for separating oil from an oil-in-water dispersion and a coalescence filtration method for separating oil from an oil-in-water dispersion, that comprises the technical features as set out in one or more of the accompanying claims.

### BRIEF DESCRIPTION Of THE DRAWINGS

Further features and advantages of the present invention will result more clearly from the illustrative, non-limiting description of a preferred, non-exclusive embodiment of a coalescence filtering apparatus for separating oil from an oil-in-water dispersion and a coalescence filtration method for separating oil from an oil-in-water dispersion, as shown in the annexed drawings, in which:
- Figure 1 schematically shows a coalescence filtering apparatus for separating oil from an oil-in-water dispersion according to the present invention; and
- Figure 2 shows the apparatus of Figure 1 in a different operating configuration.

### DETAILED DESCRIPTION

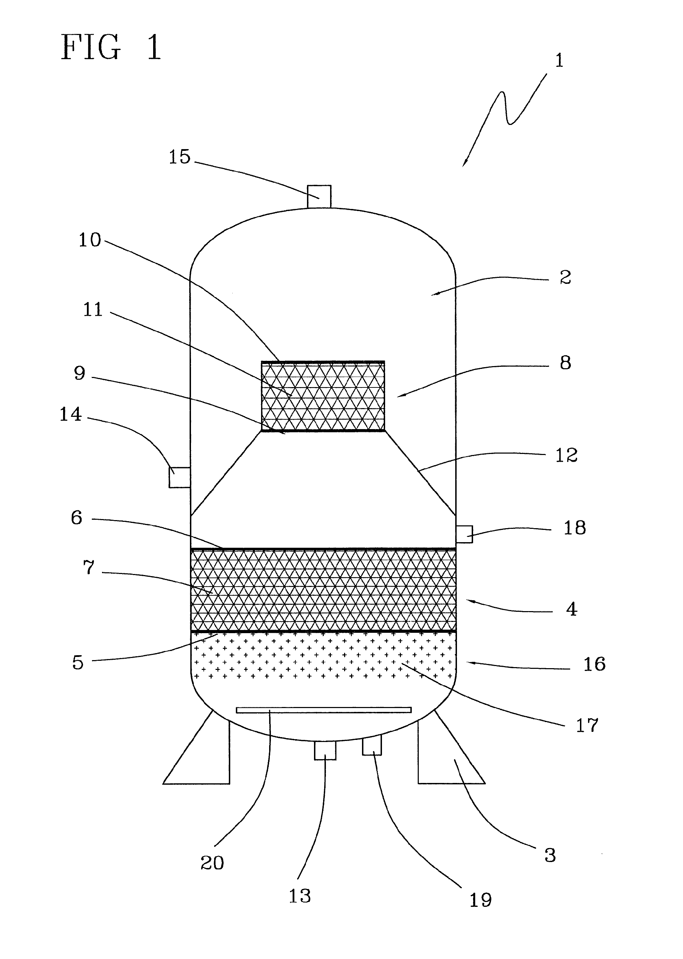

A coalescence filtering apparatus for separating oil from an oil-in-water dispersion according to the present invention has been generally designated by numeral 1 in Figure 1.

The apparatus 1 as shown in the annexed figures has been represented schematically, and its parts are not necessarily illustrated to scale.

The apparatus 1 comprises a substantially vertically-extending container 2 having convex ends for operating with internal pressures above the atmospheric pressure. The container 1 has supports 3 (schematically shown in the figures) allowing it to be anchored to a support base with a vertical orientation. The apparatus 1 is of the up-flow type, i.e. the type in which the flow of the dispersion to be separated is directed from the bottom to the top of the container 2.

The apparatus 1 comprises a first coalescence zone 4, comprising an inlet partition 5 and an outlet partition 6 having holes and delimiting a bed 7 of granules of oleophilic and water-repellent material. The two partitions 5, 6 and the bed of granules 7 extend transversely across the container 2, i.e. cover the entire cross-sectional dimensions of the portion of the container 2 on which they lie. The oleophilic material has a first average grain size, i.e. characteristic sizes of the granules having a first average value. For example, the average grain size of the oleophilic material of the first coalescence zone ranges from 0.05 mm to 5 mm, preferably from 0.3 mm to 1.2 mm. An example of oleophilic material adapted for use in the apparatus 1 is gel polystyrene crosslinked with divinylbenzene. The pair of partitions 5, 6 have the purpose of delimiting the space of the bed of granules 7, and prevent any expansion of the bed. It should be noted that the partitions 5, 6 have holes to allow the dispersion to flow and prevent the passage of the granules that form the bed. As used in the present disclosure and claims, the term "bed expansion" is intended to designate the possibility that the bed may be distributed in volumes of different capacities according to the operating state of the apparatus 1. Therefore, a bed that cannot be expanded is a bed that shall always occupy the same volume and be homogeneously distributed therein, regardless of the operating state of the apparatus 1. In other words, a non-expandable bed shall always have the same apparent density (a density measurement that considers both the actual mass of the granules of the bed and the empty spaces between granules), regardless of the operating configuration of the apparatus 1. Conversely, an expandable bed is a bed that occupies different volumes according to the operating state of the apparatus 1. In other words, an expandable bed has different apparent densities according to the operating configuration of the apparatus 1.

The apparatus 1 further comprises a second coalescence zone 8, which is located structurally above the first coalescence zone 4 and functionally downstream from it. The second coalescence zone comprises an inlet partition 9 and an outlet partition 10 having holes and delimiting a bed of granules of oleophilic material having a second average grain size, greater than the average grain size of the bed 7 of the first coalescence zone 4. Here again the pair of partitions 9, 10 have the purpose of delimiting the space of the bed of granules 11, and prevent any expansion of the bed, while ensuring the passage of the dispersion.

Preferably, as schematically shown in the accompanying figures, a fluid-tight funnel-shaped wall 12 extends within the container 2 between the outlet partition 6 of the first coalescence zone 4 and the inlet partition 9 of the second coalescence zone 8. This funnel-shaped wall has its smaller section at the inlet partition 9 of the second coalescence zone 8. The second coalescence zone 8 has cross sectional dimensions smaller than the cross section of the portion of the container 2 on which it lies. The cross sectional dimensions of the second coalescence zone 8 is substantially equal to the cross sectional dimensions of the smaller section of the funnel-shaped wall 12.

The purpose of the two coalescence zones is to provide separation of oil dispersed in water. To this end, the dispersion to be separated is introduced under pressure into a lower portion of the container 2 such that it may flow through the first coalescence zone. The bed of oleophilic and water-repellent granules causes the formation of oil droplets, which tend to reach the outlet partition 6 (under the hydrostatic force). Then, these droplets are carried by the fluid stream (and the hydrostatic force) toward the second coalescence zone 8, in which the bed of oleophilic and water-repellent granules (having a greater grain size than the bed of the first coalescence zone) causes the formation of larger oil drops. These oil drops reach the top of the container and form an oil phase that is well separated from the water phase. This oil phase is withdrawn from the top of the container 2. For this purpose, the container 2 has an inlet 13 for the dispersion, which is placed in a bottom portion of the container 2 below the first coalescence zone 4, an outlet 14 for the filtered water, which is located above the first coalescence zone 4, and an outlet 15 for the separated oil, which is located at the top of the container 2. It shall be noted that the outlet 14 for the filtered water is placed structurally below the second coalescence zone 8 and is separated by the funnel-shaped wall 12 from the flow of the dispersion that reaches the second coalescence zone 8 from the first coalescence zone 4.

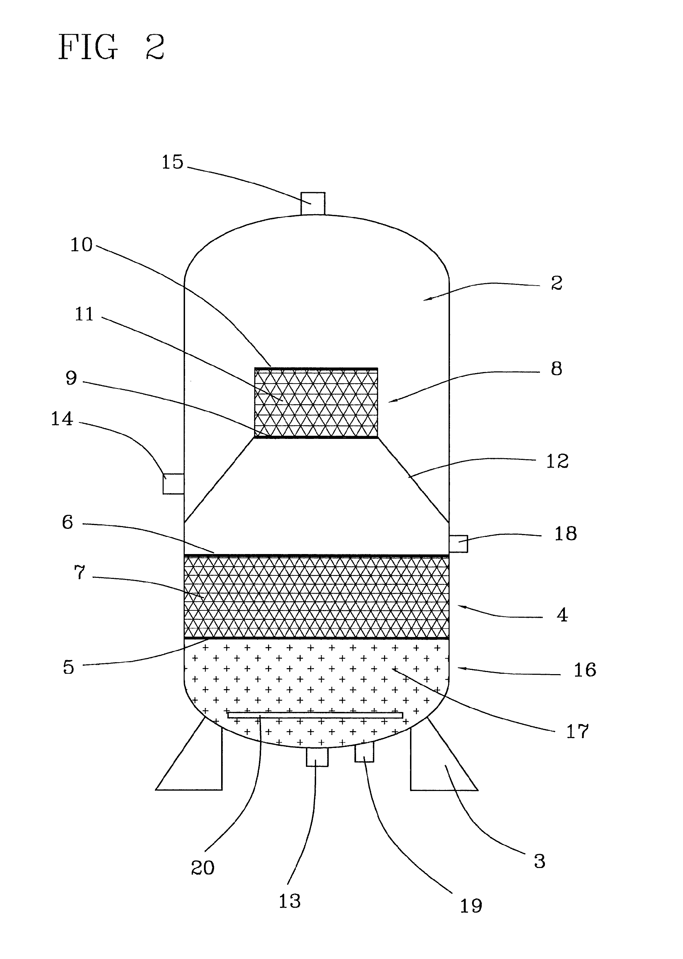

Advantageously, the apparatus 1 comprises a filtering bed 16 comprising a material in the form of granules 17 having an average density of less than 1000 kg/m³, preferably ranging from 750 to 960 kg/m³. The filtering bed is placed structurally below the first coalescence zone 4 and functionally upstream from it. It shall be noted that the density of the granules of the filtering bed is lower than the density of water, such that, during operation of the apparatus 1, the filtering bed 16 may be subjected to a hydrostatic force that pushes the filtering bed toward the first coalescence zone 5. Due to this hydrostatic force, all the granules of the filtering bed are contained in a volume directly underlying the first coalescence zone 4, such that the granules 17 form a filter through which the dispersion is forced before reaching the first coalescence zone. It shall be noted that the amount of the granules of the filtering bed is smaller than the maximum amount of granules that may be contained in the container below the first coalescence zone (as shown in Figure 1). This will allow the filtering bed to expand (under certain conditions, as outlined below) below the first coalescence zone 4 (as shown, for instance, in Figure 2).

The purpose of the filtering bed 16 is to retain therein any solid suspensions contained in the dispersion and prevent them from reaching the first coalescence zone 4 and affecting its operation. The granules 17 of the filtering bed 16 can intercept solid suspensions and "trap" them in the filtering bed.

In the preferred embodiment of the invention, the granules of the filtering bed are preferably spherical low-density polyethylene granules. As used herein, the term "low density polyethylene" shall be intended in its typical industrial meaning, i.e. a petroleum-derived thermoplastic polymer (formed of carbon and hydrogen) whose density ranges from 900 to 950 Kg/m³, which is inert at the normal operating temperatures of prior art filtering apparatus and is substantially water impermeable. Preferably, the average size of the granules of the filtering bed is less than 5 mm, preferably ranges from 1 to 4 mm, and is more preferably about 2.5 mm.

In order to prevent the granules 17 of the filtering bed from accessing the bed of the first coalescence zone 4, the inlet partition 5 of the first coalescence zone 4 has holes whose size is smaller than the size of the granules 17 of the filtering bed 16. Preferably, the inlet partition 5 of the first coalescence zone 4 is a sintered mesh, which provides adequate mechanical properties, allowing support of the layer of resin granules of the first coalescence zone 4, and forms a screen that acts as a further interception zone for any solids that might pass through the filtering layer.

As mentioned above, the filtering bed 16 is expandable to allow bed regeneration, i.e. to remove the solid suspensions retained therein during normal operation. For this purpose, the container 2 has an inlet 18 for a washing fluid, which is placed above the first coalescence zone 4, and an outlet 14 for the washing fluid, which is located in a bottom portion of the container below the filtering bed 4, as shown in the annexed figures. Particularly, when the filtering bed requires regeneration, e.g. after a predetermined period of oil-water separation operation of the apparatus or after a predetermined amount of dispersion flow processed by the apparatus, a washing liquid (e.g. water) is designed to be fed under pressure into the container 2 through the above mentioned inlet 18. The washing liquid flows through the first coalescence zone 4 in a direction opposite to the normal direction of flow of the dispersion to be separated, i.e. from top to bottom, and reaches the filtering bed 17. It will be appreciated that, during this operation, the bed of the first coalescence zone acts as a diffuser for the flow of washing liquid, and makes the washing flow from the first coalescence zone substantially uniform across the inlet partition 5. When the flow of washing liquid reaches the filtering bed 16, the latter expands to fill the whole volume between the inlet partition 5 and the bottom of the container 2. Such expansion is caused by the viscous friction forces that act upon the granules 17 of the bed as the washing fluid flows thereon. The washing fluid is introduced into the container 2 at such flow rate and pressure as to ensure that the above mentioned viscous forces are greater than the hydrostatic forces that tend to retain the granules 17 of the filtering bed 16 proximate the first coalescence zone. Thus, as mentioned above, the filtering bed 17 expands and the granules 17 move apart from one another, thereby allowing the washing fluid to remove the solids retained between the granules.

As the filtering bed 16 is being washed, granules 17 are preferably mechanically rubbed against one another to remove the solids adhered to their surface and wash them away. In a first embodiment of the invention, such mechanical rubbing action is carried out by stirring the granules of the filtering bed using a mechanical stirrer 20. Such mechanical stirrer 20 (schematically shown in the annexed figures) is placed in a bottom portion of the container 2 level with the filtering bed 16 and is designed to act upon the granules 17. Instead of or in combination with the use of the mechanical stirrer, mechanical rubbing is obtained by creating a fluid-dynamic turbulence in the filtering bed, by feeding gas into the filtering bed 16. The washing fluid, containing the solids removed from the filtering bed 17 and the inlet partition 5, is drained off the outlet 19 located on the bottom of the container 2. Once the filtering bed 16 has been washed, it is regenerated and can be restored to its effective suspended solid-retaining action. It shall be noted that, during washing of the filtering bed 16, the flow of the dispersion into the container 2 is temporarily stopped, and is only restored at the end of the washing process.

The above disclosure clearly shows that the apparatus 1 can prevent contamination of the coalescence bed with the solid particles contained in the dispersion to be separated and can treat dispersions that are partially contaminated with suspended solids (to an extent of less than 100 ppm) without requiring long and expensive shutdowns to restore the function of the coalescence zones.

The coalescence filtering apparatus for separating oil from an oil-in-water dispersion and the coalescence filtration method for separating oil from an oil-in-water dispersion according to the invention are susceptible to may variants, without departure from the scope of the invention as described above and claimed below.

## Claims

1. A coalescence filtering apparatus for separating oil from an oil-in-water dispersion comprising:
a substantially vertically-extending container (2);
a first coalescence zone (4) comprising an inlet partition (5) and an outlet partition (6) having holes and delimiting a bed of granules (7) of oleophilic material having a first average grain size, said pair of partitions (5, 6) inhibiting expansion of said bed of granules (7);
a second coalescence zone (8), located structurally above said first coalescence zone (4) and functionally upstream therefrom, comprising an inlet partition (9) and an outlet partition (10) having holes and delimiting a bed of granules (11) of oleophilic material having a first average grain size, said pair of partitions (9, 10) inhibiting expansion of said bed of granules (11);
**characterized in that** it comprises a filtering bed (16) comprising material in the form of granules (17) having an average density of less than 1000 kg/m³, which is located structurally below said first coalescence zone (4) and functionally upstream therefrom, said filtering bed (16) being able to expand within the container (2) below said first coalescence zone (4).

2. An apparatus as claimed in claim 1, wherein the inlet partition (5) in the first coalescence zone (4) has holes smaller than the granules (17) of the filtering bed (16).

3. An apparatus as claimed in claim 1 or 2, wherein said filtering bed (16) comprises granules (17) made of low-density polyethylene.

4. An apparatus as claimed in any of the preceding claims, wherein said container (2) comprises an inlet for the dispersion to be filtered and separated, which is located in a bottom portion of the container (2) below the filtering bed (16), an outlet (14) for the filtered water, located above the first coalescence zone (4), an outlet (15) for oil, which is located above the second coalescence zone (8), an inlet (18) for a washing fluid, which is located above the first coalescence zone (4), an outlet (19) for the washing fluid, which is located in a bottom portion of the container (2) below the filtering bed (16).

5. An apparatus as claimed in claim 1, wherein the average grain size of the granules (17) of the filtering bed (16) is less than 3 mm.

6. An apparatus as claimed in any of the preceding claims, comprising a mechanical stirrer (20), which is located in a bottom portion of the container (2) level with the filtering bed (16) and acts upon the granules (17) of the filtering bed.

7. An apparatus as claimed in any of the preceding claims, wherein the inlet partition (5) in the first coalescence zone (4) is a sintered mesh having apertures whose size is smaller than that of the granules (17) of the filtering bed (16).

8. An apparatus as claimed in any of the preceding claims, comprising a funnel-shaped wall (12) which extends between the outlet partition (6) of the first coalescence zone (4) and the inlet partition (9) of the second coalescence zone (8).

9. A coalescence filtration method for separating oil from an oil-in-water dispersion which comprises:
providing an apparatus as claimed in one or more of claims 1 to 8;
pressure-feeding a dispersion to be filtered and
separated into a portion of the container located below said filtering bed (16);
causing said dispersion to flow through the filtering bed (16), the first coalescence zone (4) and the second coalescence zone (8);
after a predetermined time or the supply of a predetermined amount of dispersion into the container:
pressure-feeding a washing liquid into a portion of the container located above the first coalescence zone (4),
causing said washing liquid to flow through the first coalescence zone (4) from the outlet partition (6) toward the inlet partition (5),
causing said washing liquid to flow through said filtering bed (16) such that the granules (17) of the filtering bed (16) move apart from one another and expand the filtering bed.

10. A method as claimed in claim 9, which comprises mechanical rubbing of the granules (17) of the filtering bed (16) as the washing liquid flows through the filtering bed.

11. A method as claimed in claim 10, wherein mechanical rubbing is obtained by stirring the granules (17) of the filtering bed (16) using a mechanical stirrer (20).

12. A method as claimed in claim 10, wherein mechanical rubbing is obtained by creating a fluid dynamic turbulence in the filtering bed.

13. A method as claimed in claim 12, wherein the fluid dynamic turbulence is created by feeding a gas into the filtering bed.
